# EUROPEAN PATENT APPLICATION

(11) **EP 4 215 584 A1**
(43) Date of publication of application: **26.07.2023**
(21) Application number: 22811507.7
(22) Date of filing: 02.05.2022
(51) Int. Cl.: C08L 25/12, C08L 51/04, C08L 101/08

(54) **THERMOPLASTIC RESIN COMPOSITION**

(30) Priority: 24.05.2021 KR 20210066306
(71) Applicant: Lg Chem, Ltd., Seoul 07336 (KR)
(72) Inventor: PARK, Sang Hoo, Daejeon 34122 (KR); CHOI, Jeong Su, Daejeon 34122 (KR); LEE, Won Seok, Daejeon 34122 (KR); LEE, Roo Da, Daejeon 34122 (KR); KIM, Yeo Ju, Daejeon 34122 (KR); LEE, Jong Ju, Daejeon 34122 (KR)
(74) Representative: Goddar, Heinz J.
(86) International application number: PCT/KR2022/006246
(87) International publication number: WO 2022/250314

(57) **Abstract**

The present invention relates to thermoplastic resin composition comprising: a graft polymer comprising a diene-based rubber polymer onto which a (meth)acrylate-based monomer unit and a vinyl aromatic monomer unit are grafted; a non-graft polymer comprising a (meth)acrylate-based monomer unit and a vinyl aromatic monomer unit; and 3 to 30% by weight of waste artificial marble.

## Description

### [Technical Field]

### Cross-reference to related applications

The present invention claims the benefit of priority based on Korean Patent Application No. 10-2021-0066306 dated May 24, 2021, and all contents published in the literature of the Korean patent application are incorporated as a part of this specification.

### Technical Field

The present invention relates to a thermoplastic resin composition, and more particularly, to a thermoplastic resin composition having excellent scratch resistance and impact resistance.

### [Background Art]

An increasing number of countries are taking measures against environmental pollution such as marine pollution caused by plastics around the world, and there is a trend to seek various ways to recycle waste plastics. Considering this global trend, Korea cannot be an exception. Recently, the refusal to collect recyclable resources, which has been raised as a social problem, also does not seem unrelated to the global trend from a broader perspective. Based on this background, the waste plastic generated after the introduction or supplementation of a system capable of inducing the maximum suppression of waste plastic in the future needs to be subjected to material recycling, and therefore, studies on biodegradable plastics and renewable plastics have been actively carried out in domestic companies.

From this point of view, artificial marble is a building material that has been in the spotlight recently, and about 300,000 tons are produced worldwide, and it has a market of about 600 billion won. Domestic production is 100,000 tons, and artificial marble currently used in Korea is made from (meth)acrylate-based monomers, (meth)acrylate-based polymers, and fillers as raw materials. However, when processing artificial marble to the required size during the manufacturing process, a large amount of scrap and dust are generated, which cannot be used for other products and is simply dumped in landfills or incinerated, causing soil pollution. Accordingly, research on ways to utilize waste artificial marble is being conducted.

### [Related Art Document]

### [Patent Document]

(Patent Document 1) KR2009-0092882A

### [Disclosure]

### [Technical Problem]

An object of the present invention is to provide a thermoplastic resin composition having excellent scratch resistance and impact resistance.

### [Technical Solution]

In order to solve the above problems, (1) the present invention provides a thermoplastic resin composition comprising: a graft polymer comprising a diene-based rubber polymer onto which a (meth)acrylate-based monomer unit and a vinyl aromatic monomer unit are grafted; a non-graft polymer comprising a (meth)acrylate-based monomer unit and a vinyl aromatic monomer unit; and 3 to 30% by weight of waste artificial marble.

Further, (2) the present invention provides a thermoplastic resin composition according to (1), wherein the waste artificial marble comprises a (meth)acrylate-based monomer unit.

Further, (3) the present invention provides a thermoplastic resin composition according to (1) or (2), comprising 10 to 30% by weight of the waste artificial marble.

Further, (4) the present invention provides a thermoplastic resin composition according to any one of (1) to (3), comprising 10 to 50% by weight of the graft polymer.

Further, (5) the present invention provides a thermoplastic resin composition according to any one of (1) to (4), wherein a vinyl cyanide-based monomer unit is grafted onto the diene-based rubber polymer.

Further, (6) the present invention provides a thermoplastic resin composition according to any one of (1) to (5), wherein the graft polymer includes a free polymer comprising a (meth)acrylate-based monomer unit and a vinyl aromatic monomer unit that is not grafted onto the diene-based rubber polymer.

Further, (7) the present invention provides a thermoplastic resin composition according to any one of (1) to (6), wherein the diene-based rubber polymer has an average particle diameter of 200 to 500 nm.

Further, (8) the present invention provides a thermoplastic resin composition according to any one of (1) to (7), comprising 30 to 80% by weight of the non-graft polymer.

Further, (9) the present invention provides the thermoplastic resin composition according to any one of (1) to (8), wherein the non-graft polymer comprises a vinyl cyanide-based monomer unit.

In addition, (10) the present invention provides the thermoplastic resin composition according to any one of (1) to (9), comprising 5 to 20% by weight of the diene-based rubber polymer; 20 to 70% by weight of the (meth)acrylate-based monomer unit; 10 to 30% by weight of the vinyl aromatic monomer unit; and 3 to 30% by weight of the waste artificial marble.

### [Effects of the Invention]

The thermoplastic resin composition of the present invention can implement excellent scratch resistance and impact resistance.

### [Modes of the Invention]

Hereinafter, the present invention will be described in more detail to help the understanding of the present invention.

At this time, the terms or words used in the specification and claims should not be interpreted as being limited to conventional or dictionary meanings, and the terms or words should be interpreted as a meaning and a concept that are consistent with the technical concept of the present invention based on the principle that the inventor can appropriately define the concepts of terms in order to explain his/her own invention in the best way.

In the present invention, the 'diene-based rubber polymer' may refer to a polymer prepared by crosslinking diene-based monomers only or a diene-based monomer and a comonomer copolymerizable therewith. The diene-based monomer may be one or more selected from the group consisting of 1,3-butadiene, isoprene, chloroprene and piperylene, of which 1,3-butadiene is preferable. The comonomer may include an aromatic vinyl-based monomer, a vinyl cyanide-based monomer, and an olefin-based monomer. The diene-based rubber polymer may be one or more selected from the group consisting of a butadiene rubber polymer, a butadiene-styrene rubber polymer, a butadiene-acrylonitrile rubber polymer, and an ethylene-propylene rubber polymer.

In the present invention, '(meth)acrylate-based monomer' may be a C₁-C₁₀ alkyl (meth)acrylate-based monomer, and the C₁-C₁₀ alkyl (meth)acrylate-based monomer may be one or more selected from the group consisting of methyl (meth)acrylate, ethyl (meth)acrylate, propyl (meth)acrylate, 2-ethylhexyl (meth)acrylate and decyl (meth)acrylate, of which methyl methacrylate is preferable.

In the present invention, 'vinyl aromatic monomer' may be one or more selected from the group consisting of styrene, α-methyl styrene, α-ethyl styrene, and p-methyl styrene, of which styrene is preferable.

In the present invention, 'vinyl cyanide-based monomer' may be one or more selected from the group consisting of acrylonitrile, methacrylonitrile, phenylacrylonitrile and α-chloroacrylonitrile, of which acrylonitrile is preferable.

In the present invention, 'average particle diameter' may mean an arithmetic average particle diameter in a particle size distribution measured by dynamic light scattering, specifically, an average particle diameter of scattering intensity. The average particle diameter can be measured using Nicomp 370HPL equipment (product name, manufacturer: PSS Nicomp).

### 1. Thermoplastic resin composition

A thermoplastic resin composition according to an embodiment of the present invention comprises: a graft polymer comprising a diene-based rubber polymer onto which a (meth)acrylatebased monomer unit and a vinyl aromatic monomer unit are grafted; a non-graft polymer comprising a (meth)acrylate-based monomer unit and a vinyl aromatic monomer unit; and 3 to 30% by weight of waste artificial marble.

In general, artificial marble can create various textures, colors and patterns, so it has a good decorative effect, is easy to grind and precisely machined, has excellent chemical resistance, stain resistance, heat resistance, processability and impact resistance, and maintenance is easy and used in various fields. However, when artificial marble is processed into building materials and kitchen materials, about 15 to 20% of waste artificial marble such as scrap and dust is generated. This waste artificial marble is pyrolyzed to be used as raw materials or pulverized and recycled as raw materials for artificial marble.

However, the present inventors have found that when waste artificial marble is used in an appropriate amount in a thermoplastic resin composition, scratch resistance is remarkably improved while minimizing the reduction in impact resistance, and the resulting composition has excellent processability and can be applied to a wide range of fields, and the present invention has been completed.

The thermoplastic resin composition according to an embodiment of the present invention may contain 3 to 30% by weight of the waste artificial marble, preferably 10 to 30% by weight. When included below the above-described condition, the scratch resistance improvement effect is not implemented. When the above-mentioned condition is exceeded, processability is lowered and injection molding is impossible.

The thermoplastic resin composition may include 10 to 50% by weight of the graft polymer, preferably 20 to 40% by weight. When the above condition is satisfied, a thermoplastic resin composition having excellent impact resistance can be prepared.

The thermoplastic resin composition may include 30 to 80% by weight of a matrix polymer, preferably 35 to 70% by weight. When the above condition is satisfied, a thermoplastic resin composition having excellent processability can be prepared.

Meanwhile, the thermoplastic resin composition may include 5 to 20% by weight of the diene-based rubber polymer, preferably 10 to 15% by weight. When the above condition is satisfied, the impact resistance and surface gloss property of the thermoplastic resin composition may be improved.

In addition, the thermoplastic resin composition may include 20 to 70% by weight of the (meth)acrylate-based monomer unit, preferably 30 to 50% by weight. When the above condition is satisfied, the impact resistance and processability of the thermoplastic resin composition can be improved.

In addition, the thermoplastic resin composition may include 10 to 30% by weight of the vinyl aromatic monomer unit, preferably 15 to 30% by weight. When the above condition is satisfied, the processability of the thermoplastic resin composition can be improved.

In addition, the thermoplastic resin composition may include 3 to 30% by weight of the waste artificial marble, preferably 10 to 30% by weight. When the above condition is satisfied, the scratch resistance can be improved while minimizing the decrease in the impact resistance of the thermoplastic resin composition.

Hereinafter, the components of the present invention will be described in detail.

### 1) Graft polymer

The graft polymer is a component that improves the impact resistance of the thermoplastic resin composition. The graft polymer includes a diene-based rubber polymer to which a (meth)acrylate-based monomer unit and a vinyl aromatic monomer unit are grafted, and further includes a free polymer including a (meth)acrylate-based monomer unit and a vinyl aromatic monomer unit that is not grafted onto the diene-based rubber polymer.

Meanwhile, the graft polymer may contain 20 to 70% by weight of the diene-based rubber polymer, preferably 30 to 60% by weight. When the above-mentioned condition is satisfied, the (meth)acrylate-based monomer unit and the vinyl aromatic monomer are grafted onto the diene-based rubber polymer at an appropriate level to prepare a graft polymer having excellent impact resistance and excellent surface gloss properties.

In addition, the average particle diameter of the diene-based rubber polymer may be 200 to 500 nm, preferably 250 to 400 nm. When the above condition is satisfied, a graft polymer having excellent impact resistance and surface gloss properties can be prepared.

The graft polymer may include (meth)acrylate-based monomer units in an amount of 20 to 60% by weight, preferably 30 to 50% by weight. When the above condition is satisfied, compatibility with not only the non-graft polymer but also the waste artificial marble to be described later is excellent, so that a graft polymer capable of maximizing the effect of improving scratch resistance and impact resistance, which is the effect of waste artificial marble, can be prepared.

The graft polymer may include 3 to 30% by weight of the vinyl aromatic monomer unit, preferably 5 to 20% by weight. When the above-described condition is satisfied, a graft polymer having improved processability can be prepared.

Meanwhile, (meth)acrylate-based monomer units and vinyl aromatic monomer units as well as vinyl cyanide-based monomers may be grafted onto the diene-based rubber polymer. In this case, the graft polymer may include 7% by weight or less of vinyl cyanide-based monomer units. When the above condition is satisfied, a graft polymer with improved chemical resistance can be prepared while minimizing yellowing. In addition, it is possible to minimize the generation of solid content (agglomerates) during the preparation process of the graft polymer.

The graft polymer may be prepared by emulsion polymerization, suspension polymerization, and bulk polymerization, but among them, it is preferably prepared by emulsion polymerization capable of preparing a graft polymer having excellent both impact resistance and surface gloss properties.

### 2) Non-graft polymer

The non-graft polymer is a component that improves the processability of the thermoplastic resin composition. The non-graft polymer includes a (meth)acrylate-based monomer unit and a vinyl aromatic monomer unit.

The non-graft polymer may include (meth)acrylate-based monomer units in an amount of 60 to 85% by weight, preferably 65 to 80% by weight. When the above condition is satisfied, compatibility with not only the non-graft polymer but also the waste artificial marble to be described later is excellent, so that a non-graft polymer capable of maximizing the effect of improving scratch resistance and impact resistance, which is the effect of waste artificial marble, can be prepared.

The non-graft polymer may contain 15 to 40% by weight of the vinyl aromatic monomer unit, preferably 20 to 35% by weight. When the above condition is satisfied, a non-graft polymer having excellent processability can be prepared.

The non-graft polymer may further include a vinyl cyanide-based monomer to improve chemical resistance. In this case, in order to minimize yellowing, it is preferable to include 20% by weight or less.

The non-graft polymer may be prepared by one or more method selected from the group consisting of emulsion polymerization, suspension polymerization, and bulk polymerization, of which it is preferably prepared by bulk polymerization capable of preparing a high-purity polymer.

### 3) Waste artificial marble

Waste artificial marble is included to improve the scratch resistance of the thermoplastic resin composition.

Since waste artificial marble is a waste of artificial marble, it can be manufactured in the same way as artificial marble. Specifically, as the artificial marble, a composition for artificial marble including a (meth)acrylate-based monomer, a (meth)acrylate-based polymer, an initiator, and a filler as raw materials may be used. Then, the composition for artificial marble may be manufactured by extruding, curing by press molding, and then performing demolding and post-processing. Here, the post-processing may mean cooling, grinding, or sanding.

The (meth)acrylate-based polymer, which is a component of the composition for artificial marble, may be polymethylmethacrylate. The initiator may be one or more selected from the group consisting of t-butylperbenzoate, t-butylperoxybenzoate, t-butylperoxy isopropyl carbonate, t-butylperoxy-2-ethylhexanoate and 1,1-bis(t-butylperoxy)-3,3,5-trimethylcyclohexane. The filler may be one or more selected from the group consisting of aluminum hydroxide, magnesium hydroxide, calcium carbonate, silica, alumina, and potassium aluminic acid.

Since the main raw materials of the waste artificial marble are a (meth)acrylate-based monomer and a (meth)acrylate-based polymer, the waste artificial marble may include a (meth)acrylate-based monomer unit. In addition, due to the (meth)acrylate-based monomer unit included in the waste artificial marble, the above-described graft polymer and non-graft polymer have excellent compatibility, and as a result, it is possible to remarkably improve the scratch resistance of the thermoplastic resin composition while minimizing the decrease in impact resistance.

The waste artificial marble may be one or more selected from the group consisting of scrap and dust generated during processing of the artificial marble, and may be a processed product that has been pulverized, but if it is waste artificial marble, it can be used regardless of the shape, so it is not particularly limited. In addition, even when using scrap that is larger than dust, the compatibility between the graft polymer and the non-graft polymer is excellent due to the raw material properties of the waste artificial marble, so the scratch resistance of the thermoplastic resin composition can be remarkably improved. In addition, the waste artificial marble is preferably 2 mm or less in consideration of the ease of processing of the thermoplastic resin composition, and preferably has a powder form. Waste artificial marble having a desired particle size can be obtained using a mesh.

Hereinafter, embodiments of the present invention will be described in detail so that those of ordinary skill in the art can easily carry out the present invention. However, the present invention may be embodied in many different forms and is not limited to the embodiments set forth herein.

### Preparation Example 1

A mixed solution including 100 parts by weight of ion-exchanged water, 1.0 parts by weight of sodium dodecylbenzene sulfonate, 35 parts by weight of methyl methacrylate, 11.9 parts by weight of styrene, 3 parts by weight of acrylonitrile, 0.5 parts by weight of t-dodecyl mercaptan, 0.048 parts by weight of sodium formaldehyde sulfoxylate, 0.015 parts by weight of disodium ethylenediaminetetraacetate, 0.001 parts by weight of iron (II) sulfate, and 0.04 parts by weight of cumene hydroperoxide was prepared.

After adding 50 parts by weight of butadiene rubber polymer latex polymer (average particle diameter of rubber polymer in latex: 250 nm, gel content: 90%) to the reactor, the temperature of the reactor was raised to 75 °C. Polymerization was carried out while continuously introducing the mixed solution into the reactor for 3 hours. Then, the temperature of the reactor was raised to 80 °C, and after aging for 1 hour, polymerization was terminated to obtain a graft polymer latex.

The graft polymer latex was put into an aqueous solution including 2 parts by weight of magnesium acetate and 0.5 parts by weight of formic acid, and agglomerated by mechanical shearing (mechanical coagulation). Thereafter, aging, washing, dehydration and drying were carried out to obtain a graft polymer powder.

### Preparation Example 2

A raw material obtained by mixing 68 parts by weight of methyl methacrylate, 22 parts by weight of styrene, 7 parts by weight of acrylonitrile, 3 parts by weight of methacrylic acid, 30 parts by weight of toluene and 0.15 parts by weight of t-dodecyl mercaptan was continuously introduced into a reactor so that the average residence time became 3 hours, and polymerization was carried out. At this time, the temperature of the reactor was maintained at 148 °C. The polymerization solution continuously discharged from the reactor was heated in a preheating tank, and unreacted monomers were volatilized in a volatilization tank. Then, while the temperature of the polymerization solution was maintained at 210 °C, non-graft polymer pellets were prepared using a polymer transfer pump extrusion machine.

### Preparation Example 3

The scrap and dust of artificial marble generated in the course of the commercialization of artificial marble prepared by extrusion, press molding and post-processing of a composition for artificial marble including polymethyl methacrylate, methyl methacrylate, t-butylperoxybenzoate, ethylene glycol dimethacrylate, 2-(methacryloyloxy)ethyl phosphate, and aluminum hydroxide were recovered to obtain the powder form of waste artificial marble.

### Examples 1 to 5

A thermoplastic resin composition was prepared by mixing the graft polymer of Preparation Example 1, the non-grafting polymer of Preparation Example 2, and the waste artificial marble of Preparation Example 3 in the amounts shown in Table 1 below.

### Comparative Examples 1 to 5

A thermoplastic resin composition was prepared by mixing the graft polymer of Preparation Example 1, the non-grafting polymer of Preparation Example 2, and the waste artificial marble of Preparation Example 3 in the amounts shown in Table 2 below.

### Comparative Example 6

A graft polymer (ABS, manufacturer: LG Chemical Co., Ltd., trade name: DP270) including a butadiene rubber polymer having an average particle diameter of 250 nm onto which styrene and acrylonitrile are grafted, a styrene/acrylonitrile polymer (SAN, manufacturer: LG Chemical Co., Ltd., trade name: 92HR) and the waste artificial marble powder of Preparation Example 3 were mixed in the amounts shown in Table 2 below to prepare a thermoplastic resin composition.

### Comparative Example 7

A graft polymer (ABS, manufacturer: LG Chemical Co., Ltd., trade name: DP270) including a butadiene rubber polymer having an average particle diameter of 250 nm onto which styrene and acrylonitrile are grafted, and a styrene/acrylonitrile polymer (SAN, manufacturer: LG Chemical Co., Ltd., trade name: 92HR) were mixed in the amounts shown in Table 2 below to prepare a thermoplastic resin composition.

### Experimental Example 1

After mixing 100 parts by weight of the thermoplastic resin compositions of Examples and Comparative Examples, 0.5 parts by weight of (N,N'-ethylenebis(stearamide)) as a lubricant, and 0.3 parts by weight of an antioxidant, a specimen was prepared by extrusion and injection. The physical properties of the specimen were evaluated by the methods described below, and the results are shown in Tables 1 and 2 below.
(1) Pencil hardness: According to ASTM D3363, after a surface of a 10 cm×10 cm×3 mm specimen left at 23°C and 50% relative humidity for 48 hours was scratched 5 times with a pencil of various hardness at 23°C under a load of 500 g, the degree of scratching was visually evaluated. When a pencil scratch mark occurred on the surface of the specimen two or more times, the pencil hardness grade was classified as follows.
   (soft) 6B-5B-4B-3B-2B-B-HB-F-H-2H-3H-4H-5H-6H (hard)
(2) Izod impact strength (kgf·cm/cm, 1/4 In): It was measured according to ASTM D256-10 at 25 °C.

**[Table 1]**

| Classification | | Example 1 | Example 2 | Example 3 | Example 4 | Example 5 |
|---|---|---|---|---|---|---|
| Graft polymer | Preparation Example 1 | 30 | 30 | 30 | 30 | 30 |
| Non-graft polymer | Preparation Example 2 | 67 | 65 | 60 | 50 | 40 |
| Waste artificial marble | Preparation Example 3 | 3 | 5 | 10 | 20 | 30 |
| Pencil hardness | | 2H | 2H | 3H | 3H | 4H |
| Impact strength | | 16 | 14 | 12 | 11 | 10 |

**[Table 2]**

| Classification | | Compar ative Example 1 | Compar ative Example 2 | Compar ative Example 3 | Compar ative Example 4 | Compar ative Example 5 | Compar ative Example 6 | Compar ative Example 7 |
|---|---|---|---|---|---|---|---|---|
| Graft poly mer | Prepara tion Exampl e 1 | 30 | 30 | 30 | 30 | 30 | 0 | 0 |
| | ABS | 0 | 0 | 0 | 0 | 0 | 30 | 30 |
| Non-graft poly mer | Prepara tion Exampl e2 | 70 | 69 | 68 | 39 | 30 | 0 | 0 |
| | SAN | 0 | 0 | 0 | 0 | 0 | 60 | 70 |
| Wast e artifi cial marbl e | Prepara tion Exampl e 3 | 0 | 1 | 2 | 31 | 40 | 10 | 0 |
| Pencil hardness | | F | F | F | Processi ng Impossi ble | Processi ng Impossi ble | H | F |
| Impact strength | | 16 | 16 | 16 | | | 6 | 15 |

Referring to Tables 1 and 2, Examples 1 to 5 including the waste artificial marble in an appropriate amount were excellent in scratch resistance and impact resistance. However, Comparative Example 1 not including the waste artificial marble did not have excellent scratch resistance. Also, Comparative Examples 2 and 3 including a small amount of waste artificial marble had no improvement of scratch resistance compared to Comparative Example 1.

In addition, in Comparative Examples 4 and 5 including an excessive amount of waste artificial marble, injection was not possible, so specimens could not be prepared.

In addition, Comparative Example 6 including the diene-based graft polymer and the waste artificial marble improved scratch resistance compared to Comparative Example 7 not including the waste artificial marble, but the improvement effect was insignificant. In addition, even in Comparative Example 6 including the waste artificial marble in the same amount as in Example 3, the effect of improving the scratch resistance was insufficient due to a decrease in compatibility.

## Claims

1. A thermoplastic resin composition comprising:
a graft polymer comprising a diene-based rubber polymer onto which a (meth)acrylatebased monomer unit and a vinyl aromatic monomer unit are grafted;
a non-graft polymer comprising a (meth)acrylate-based monomer unit and a vinyl aromatic monomer unit; and
3 to 30% by weight of waste artificial marble.

2. The thermoplastic resin composition of claim 1, wherein the waste artificial marble comprises a (meth)acrylate-based monomer unit.

3. The thermoplastic resin composition of claim 1, comprising 10 to 30 wt% of the waste artificial marble.

4. The thermoplastic resin composition of claim 1, comprising 10 to 50% by weight of the graft polymer.

5. The thermoplastic resin composition of claim 1, wherein a vinyl cyanide-based monomer unit is grafted onto the diene-based rubber polymer.

6. The thermoplastic resin composition of claim 1, wherein the graft polymer comprises a free polymer comprising a (meth)acrylate-based monomer unit and a vinyl aromatic monomer unit that is not grafted onto the diene-based rubber polymer.

7. The thermoplastic resin composition of claim 1, wherein the diene-based rubber polymer has an average particle diameter of 200 to 500 nm.

8. The thermoplastic resin composition of claim 1, comprising 30 to 80% by weight of the non-graft polymer.

9. The thermoplastic resin composition of claim 1, wherein the non-graft polymer comprises a vinyl cyanide-based monomer unit.

10. The thermoplastic resin composition of claim 1, wherein the thermoplastic resin composition comprises:
5 to 20% by weight of the diene-based rubber polymer;
20 to 70% by weight of the (meth)acrylate-based monomer unit;
10 to 30% by weight of the vinyl aromatic monomer unit, and
3 to 30% by weight of the waste artificial marble.
